Europäisches Patentamt

European Patent Office

Office européen des brevets

(19)

(11) **EP 0 583 782 B1**

(12) **EUROPEAN PATENT SPECIFICATION**

| | |
|---|---|
| (45) Date of publication and mention of the grant of the patent:<br>**28.05.1997 Bulletin 1997/22** | (51) Int Cl.⁶: **C08L 77/06**, H01R 13/46<br>// (C08L77/06, 77:00, 51:06) |

(21) Application number: **93113236.9**

(22) Date of filing: **18.08.1993**

(54) **Connector**

Verbinder

Connecteur

(84) Designated Contracting States:
**DE FR GB**

(30) Priority: **20.08.1992 JP 221458/92**

(43) Date of publication of application:
**23.02.1994 Bulletin 1994/08**

(73) Proprietors:
• **YAZAKI CORPORATION**
**Minato-ku Tokyo 108 (JP)**
• **UBE INDUSTRIES LIMITED**
**Ube-shi, Yamaguchi-ken (JP)**

(72) Inventors:
• **Kato, Tetsuo, c/o Yazaki Parts Co., Ltd.**
**Haibara-gun, Shizuoka (JP)**
• **Kanda, Masahiro, c/o Yazaki Parts Co., Ltd.**
**Haibara-gun, Shizuoka (JP)**
• **Tsumiyama, Tatsuo, c/o Ube Industries, Ltd.**
**Ube-shi, Yamaguchi (JP)**

(74) Representative: **Grünecker, Kinkeldey,**
**Stockmair & Schwanhäusser Anwaltssozietät**
**Maximilianstrasse 58**
**80538 München (DE)**

(56) References cited:
**EP-A- 0 488 335          EP-A- 0 561 632**

**Description**

FIELD OF THE INVENTION

This invention relates to a connector which is of light weight, excellent in dimensional stability, heat resistance, mechanical characteristics, molding stability, productivity, thermal discoloration resistance, and fit in connecting.

BACKGROUND OF THE INVENTION

Various connectors having plastic housings (hereinafter sometimes simply referred to as "connector") have been used for connection of circuits of electric and electronic automotive parts. With the recent tendency toward weight reduction combined with the development of low-pollution engines, the demand for weight reduction of connectors has been increasing. Further, the improvements in performance and function of automobiles have aroused the necessity for connectors to have a smaller size, a more complicated shape, improved heat resistance, improved fit in connecting, as well as improved productivity.

Housings of conventional connectors have been made from a resin composition containing a large proportion of a polybutylene terephthalate (PBT) resin taking advantage of its heat resistance, dimensional stability, molding properties, and the like. However, a PBT resin has a high specific gravity, making the connector heavy. Although nylon 6 resin or nylon 66 resin has a lower specific gravity and meets the demand for weight reduction, it has a high moisture absorption, which causes dimensional change or reduction in mechanical properties, failing to satisfy the demands for size reduction, moldability to the complicated shape, and improved fit in connecting.

EP-A-0561632 and EP-A-0488375 disclose polyamide resin compositions which comprise as resin components a specific aromatic polyamide, a specific graft-modified polymer and an aliphatic polyamide and their use as connectors.

A PP resin, a PPE resin, an ABS resin, etc. have also been used as a connector housing, but none of them is satisfactory due to low heat resistance, low chemical resistance, poor fluidity, or the like disadvantages. Foamed molding of these resins or addition of hollow fillers to these resins has been attempted for weight reduction but is found accompanied by insufficient molding accuracy or considerable reduction in mechanical characteristics.

SUMMARY OF THE INVENTION

An object of the present invention is to provide a connector which is light and excellent in dimensional stability, heat resistance, mechanical characteristics, molding stability, productivity, thermal discoloration resistance, and fit in connecting.

Other objects and effects of the present invention will be apparent from the following description.

As a result of extensive investigations, the present inventors have found that the above object of the present invention is accomplished by a connector obtained by molding a resin composition containing a specific aromatic polyamide resin and a specific modified polyolefin resin.

The present invention relates to a connector comprising a housing comprising a resin composition containing (A) from 50 to 92 parts by weight of a semi-aromatic polyamide having a melting point of not less than 270°C and less than 310°C as measured with a differential scanning calorimeter, (B) from 5 to 35 parts by weight of a modified polyolefin obtained by graft-modifying polyethylene with 0.05 to 5 mol% of an $\alpha,\beta$-unsaturated carboxylic acid, an anhydride thereof, an acid halide thereof, an amidoimide thereof or an ester thereof, and (C) from 3 to 15 parts by weight of polyamide 12, per 100 parts by weight in total of said resin composition, wherein said semi-aromatic polyamide (A) is a copolymer of hexamethylenediamine adipate and hexamethylenediamine terephthalate at a weight ratio of from 80/20 to 50/50.

BRIEF DESCRIPTION OF THE DRAWINGS

FIG. 1 is a perspective view of an external housing of an automotive connector according to the present invention.

FIG. 2 a perspective view of an internal housing of an automotive connector according to the present invention.

FIG. 3 is a cross section of fitted automotive connectors according to the present invention, where external and internal housings are fitted to each other.

FIG. 4 shows the site of measuring a warpage of the external housing of an automotive connector.

DETAILED DESCRIPTION OF THE INVENTION

The semi-aromatic polyamide as component (A) is a copolymer of hexamethylenediamine adipate (hereinafter referred to as "AH salt") and hexamethylenediamine terephthalate (hereinafter referred to as "6T salt") at a weight ratio of from 80/20 to 50/50. The semi-aromatic polyamide (A) has a melting point of not less than 270°C and less than 310°C, and preferably from 290° to 300°C, as measured with a DSC. If the melting point of component (A) is less than 270°C, sufficient heat resistance cannot be obtained, and dimensional stability is deteriorated due to moisture absorption. If the melting point is 310°C or higher, the molding latitude of the resin composition for obtaining optimum connector housings is too narrow to carry out molding in a stable manner, resulting in an increase in rejection rate.

The semi-aromatic polyamide (A) can be prepared by various known processes, for example, solution polymerization in which an adipic acid halide and a terephthalic acid halide are mixed with hexamethylenediamine, and the mixture is polycondensed in a uniform solution; melt polymerization of an AH salt and a 6T salt in an autoclave; and solid phase polymerization.

Semi-aromatic polyamide (A) preferably has a relative viscosity $\eta_r$ of from 1.0 to 3.5, and preferably from 1.5 to 3.0, as measured in 98% concentrated sulfuric acid at 25°C.

The modified polyolefin as component (B) is obtained by grafting 0.05 to 5 mol%, and preferably from 0.1 to 3 mol%, of an $\alpha,\beta$-unsaturated carboxylic acid, an anhydride thereof or a derivative thereof to polyethylene. The modified polyolefin (B) preferably has a modulus of elasticity of from 198 to 1471 MPa (2,000 to 15,000 kgf/cm$^2$).

Specific examples of the $\alpha,\beta$-unsaturated carboxylic acid as a grafting monomer include acrylic acid, methacrylic acid, maleic acid, fumaric acid, tetrahydrophthalic acid, itaconic acid, citraconic acid, and crotonic acid. Derivatives of these acids include acid halides, amidoimides, and esters. Preferred of them are unsaturated dicarboxylic acids and their anhydrides.

The modified polyolefin (B) can be prepared by any known processes. For example, a selected grafting monomer is added to polyethylene in the above-specified amount, and the mixture is melt-kneaded.

The polyamide 12 as component (C) can be prepared by various known processes, for example, ring-opening polymerization of $\omega$-laurolactam or polycondensation of 12-aminododecanoic acid. The polyamide 12 (C) preferably has a relative viscosity $\eta_r$ of from 2.0 to 3.0 as measured in 98% concentrated sulfuric acid at 25°C.

The resin composition according to the present invention contains from 50 to 92 parts by weight of the semi-aromatic polyamide (A), from 5 to 30 parts by weight of the modified polyolefin (B), and from 3 to 15 parts by weight of the polyamide 12 (C) per 100 parts by weight in total of the resin composition. If the amount of the semi-aromatic polyamide (A) is less than 50 parts, heat resistance, mechanical characteristics and fit in connecting are reduced. If it exceeds 92 parts, the composition has an increased specific gravity, failing to achieve the purpose of weight reduction. If the amount of the modified polyolefin (B) is less than 5 parts, the effect of appreciably reducing the specific gravity is not obtained. If it exceeds 30 parts, a reduction in mechanical characteristics or an increase in warpage of moldings results. If the amount of the polyamide 12 (C) is less than 3 parts, the effect to reduce a warpage is insufficient. Even if it exceeds 15 parts, no further effect on reduction of a warpage results, only causing reductions in mechanical characteristics.

In addition to essential components, i.e., the semi-aromatic polyamide (A), the modified polyolefin (B) and the polyamide 12 (C), the resin composition may further contain (D) a hindered phenol series primary antioxidant and (E) a sulfur series secondary antioxidant for further improvement in heat resistance.

Examples of the hindered phenol series antioxidants as component (D) include those in which 2-position of the phenol is substituted with a methyl group and the 6-position of the phenol is substituted with a t-butyl group. Specific examples thereof include "Irganox 245" and "Irganox 1010", both produced by Chiba Geigy, and "Sumilizer BHT" and "Sumilizer GA-80", both produced by Sumitomo Chemical Co., Ltd., with "Sumilizer GA-80" being preferred.

The hindered phenol series antioxidant (D) is preferably added in an amount of from 0.05 to 1 part by weight, and more preferably from 0.1 to 0.7 part by weight, per 100 parts by weight of the total amount of components (A), (B), and (C).

Examples of the sulfur series antioxidants as component (E) include "MARK AO412S" and "MARK AO503A", both produced by Adeca Argus Chemical Co., Ltd., "Sumilizer TP-D" and "Sumilizer MB", both produced by Sumitomo Chemical Co., Ltd., with "Sumilizer TP-D" being preferred.

The sulfur series antioxidant (E) is preferably added in an amount of from 0.05 to 1 part by weight, and more preferably from 0.1 to 0.7 part by weight, per 100 parts by the total weight of components (A), (B), and (C).

If desired, components (D) and (E) may be used in combination with other antioxidants, such as copper series antioxidants and phosphorus series antioxidants.

The resin composition may furthermore contain at least one compound as a parting agent selected from the group consisting of (F) a metal salt of a higher fatty acid having from 16 to 22 carbon atoms, (G) polyethylene wax, (H) a montan wax metal salt, and (I) a montan wax ester metal salt for further improving moldability of the resin composition.

The higher fatty acid metal salt having 16 to 22 carbon atoms as component (F) include salts between a higher fatty acid, e.g., stearic acid, palmitic acid, behenic acid, etc. and a metal of the groups I to III, e.g., sodium, potassium, lithium, beryllium, magnesium, calcium, aluminum, etc. Specific examples of component (F) include sodium stearate, magnesium stearate, calcium stearate, calcium behenate, and magnesium behenate, with calcium behenate and magnesium behenate being preferred.

Specific examples of the polyethylene wax (G) include "Sanwax" produced by Sanyo Kasei Co., Ltd. and "Hiwax" produced by Mitsui Petrochemical Industries, Ltd. Among the others, "Hiwax 320P" produced by Mitsui Petrochemical Industries, Ltd. is preferred.

Examples of the montan wax metal salt (H) include a salt formed by reacting montanic acid with 0.1 to 1 equivalent of an oxide or hydroxide of a metal, e.g., the group I to III metal, e.g., sodium, potassium, lithium, beryllium, magnesium, calcium or aluminum. Preferred is a salt between montanic acid and sodium or calcium.

Examples of the montan wax ester metal salt (I) include those prepared by partially esterifying montanic acid with a dihydric alcohol having a alkylene group containing 2 to 4 carbon atoms and then neutralizing the partial ester with an oxide or hydroxide of a metal of the groups I to III, e.g., sodium, potassium, lithium, magnesium, calcium and aluminum. Preferred are those obtained by esterification with ethylene glycol, 1,2- or 1,3-propanediol or 1,3- or 1,4-butanediol followed by neutralization with sodium or potassium.

These parting agents (F) through (I) are preferably used, either alone or in combination thereof, in an amount of from 0.05 to 1 part by weight, and more preferably from 0.1 to 0.7 part by weight, per 100 parts by weight of the total amount of components (A), (B), and (C).

If desired, the resin composition may contain other additives, such as inorganic fillers, ultraviolet absorbents, weather- and light-stabilizers, crystal nucleating agents, plasticizers, lubricants, antistatic agents, flame retardants, pigments, dyes and the like, as far as the characteristics of the composition are not impaired.

The resin composition of the present invention can be prepared by melt-kneading essential components (A) to (C) and, if desired, other necessary additives selected from components (D) through (I). It is desirable that component (A) forms a matrix in which components (B) and (C) form a disperse phase, with the dispersed particle size of component (B) being from 0.5 to 2 $\mu$m and that of component (C) being from 0.5 to 1 $\mu$m.

The above-mentioned phase structure is preferably obtained by melt-kneading by means of a twin-screw extruder preferably having an L/D ratio of at least 25, and more preferably at least 30.

The connector housing according to the present invention can be prepared from the above-mentioned resin composition in a usual manner, for example by injection molding. The resin composition of the present invention can be molded to the specification appropriately designed according to the end use, such as the number or the shape of holes into which terminals of a connector are to be inserted, the shape of the locking part, and the shape of the housing. Accordingly, the connector according to the present invention is not limited by any means by the end use, the kind or the shape.

The present invention will now be illustrated in greater detail with reference to Examples.

In Examples, the following materials were used.

Semi-Aromatic Polyamide (A):

A-1:  AH salt/6T salt copolymer at a ratio of 50/50; melting point: 297°C; $\eta_r$: 2.78 (98% conc. sulfuric acid)
A-2:  AH salt/6T salt copolymer at a ratio of 60/40; melting point: 283°C; $\eta_r$: 2.77 (98% conc. sulfuric acid)

Modified Polyolefin (B):

B-1:  Prepared from polyethylene, 0.8 mol% maleic anhydride, and 0.3 mol% a peroxide radical generator ("Perbutyl Z" produced by Nippon Oils & Fats Co., Ltd.) in a twin-screw extruder at 230°C; melt index: 5.1 g/10 min (as measured according to JIS K-6760); flexural modulus: 274,6 MPa (2800 kgf/cm$^2$)

Polyamide 12 (C):

C-1:  Nylon 12 ("3014B" produced by Ube Industries, Ltd.)

Hindered Phenol Series Antioxidant (D):

D-1:  "Sumilizer GA-80" (produced by Sumitomo Chemical Co., Ltd.)

Sulfur Series Antioxidant (E):

E-1:  "Sumilizer TP-D" (produced by Sumitomo Chemical Co., Ltd.)

Higher Fatty Acid Metal Salt (F):

F-1:  Calcium behenate

Polyethylene Wax (G):

G-1: "Hiwax 320P" (produced by Mitsui Petrochemical Industries, Ltd.)

Montan Wax Metal Salt (H):

H-1: "Hoestamont NAV 101" (produced by Hoechst)

Montan Wax Ester Metal Salt (I):

I-1: "Hoechst Wax OP" (produced by Hoechst)

EXAMPLE 1

Semi-aromatic polyamide (A-1), modified polyolefin (B-1), polyamide 12 (C-1), hindered phenol series antioxidant (D-1), sulfur series antioxidant (E-1), higher fatty acid metal salt (F-1), polyethylene wax (G-1), and montan wax metal salt (H-1) were mixed according to the compounding ratio shown in Table 1 below and melt-kneaded in a twin-screw extruder ("TEX" manufactured by Japan Steel Works, Ltd.; L/D ratio: 35) at a temperature controlled at 320°C. The extruded strand was cut with a pelletizer to obtain a resin composition in the form of pellets.

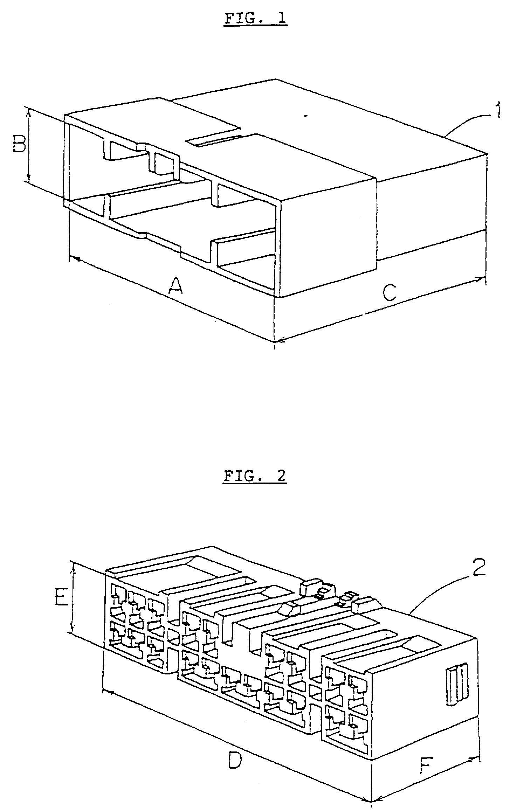

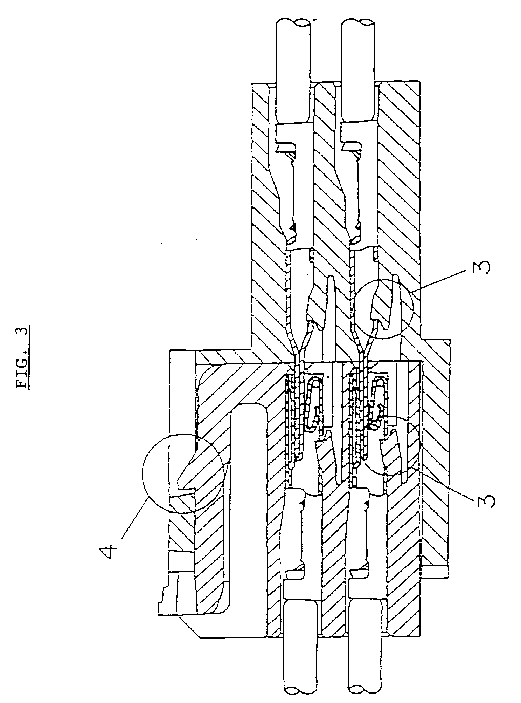

The resin composition was molded by means of an injection molding machine ("IS 55EN" manufactured by Toshiba) under the following conditions to obtain an external connector housing of 38.0 mm in depth, 58.7 mm in width, and 16.4 mm in height (corresponding to C, A and B in FIG. 1) having a volume of 11.85 $cm^3$ and an internal connector housing of 22.0 mm in depth, 54.7 mm in width, and 12.0 mm in height (corresponding to F, D and E in FIG. 2) having a volume of 5.45 $cm^3$. In FIGs. 1 and 2, numeral 1 denotes an external housing and 2 denotes an internal housing.

Injection Molding Conditions:

Cylinder temperature: 315°C
Mold temperature: 25°C
Injection pressure: 78,5 MPa (800 kgf/$cm^2$)
Injection speed: medium

EXAMPLE 2

Semi-aromatic polyamide (A-2), modified polyolefin (B-1), polyamide 12 (C-1), hindered phenol series antioxidant (D-1), sulfur series antioxidant (E-1), higher fatty acid metal salt (F-1), polyethylene wax (G-1), and montan wax ester metal salt (I-1) were mixed according to the compounding ratio shown in Table 1 and melt-kneaded and extruded in the same manner as in Example 1 to obtain a resin composition in the form of pellets.

The resin composition was injection molded under the following conditions to obtain an external connector housing and an internal connector housing each having the same dimension as in Example 1.

Injection Molding Conditions:

Cylinder temperature: 305°C
Mold temperature: 25°C
Injection pressure: 78.5 MPa (800 kgf/$cm^2$)
Injection speed: medium

EXAMPLE 3

Semi-aromatic polyamide (A-1), modified polyolefin (B-1), polyamide 12 (C-1), hindered phenol series antioxidant (D-1), sulfur series antioxidant (E-1), higher fatty acid metal salt (F-1), polyethylene wax (G-1), and montan wax metal salt (H-1) were mixed according to the compounding ratio shown in Table 1 and melt-kneaded and extruded in the same manner as in Example 1 to obtain a resin composition in the form of pellets.

The pellets were injection molded under the following conditions to obtain external and internal connector housings having the same dimensions as in Example 1.

Injection Molding Conditions:

    Cylinder temperature: 315°C
    Mold temperature: 25°C
    Injection pressure: 78.5 MPa (800 kgf/cm$^2$)
    Injection speed: medium

COMPARATIVE EXAMPLE 1

Semi-aromatic polyamide (A-1), modified polyolefin (B-1), polyamide 12 (C-1), hindered phenol series antioxidant (D-1), sulfur series antioxidant (E-1), higher fatty acid metal salt (F-1), polyethylene wax (G-1), and montan wax metal salt (H-1) were mixed according to the compounding ratio shown in Table 1 and melt-kneaded and extruded in the same manner as in Example 1 to obtain a resin composition in the form of pellets.

The resin composition was injection molded under the same conditions as in Example 1 to obtain external and internal connector housings having the same dimensions as in Example 1.

COMPARATIVE EXAMPLE 2

Semi-aromatic polyamide (A-1) and modified polyolefin (B-1) were mixed, melt-kneaded, and extruded in the same manner as in Example 1 to obtain a resin composition in the form of pellets.

The resin composition was injection molded under the same conditions as in Example 1 to obtain external and internal connector housings having the same dimensions as in Example 1.

COMPARATIVE EXAMPLE 3

Connector housings were prepared in the same manner as in Example 1, except for replacing the resin composition used in Example 1 with nylon 66 ("2020 UW1" produced by Ube Industries, Ltd.) and changing the cylinder temperature to 280°C.

COMPARATIVE EXAMPLE 4

Connector housings were prepared in the same manner as in Example 1, except for replacing the resin composition used in Example 1 with a PBT resin ("1401-X08" produced by Toray Industries, Inc.) and changing the cylinder temperature to 260°C.

TABLE 1

| Composition(part) | | | | | | | |
|---|---|---|---|---|---|---|---|
| | Example No. | | | Comparative Example No. | | | |
| Component | 1 | 2 | 3 | 1 | 2 | 3 | 4 |
| A-1 | 77 | - | 67 | 37 | 85 | - | - |
| A-2 | - | 77 | - | - | - | - | - |
| B-1 | 15 | 15 | 25 | 55 | 15 | - | - |
| C-1 | 8 | 8 | 8 | 8 | - | - | - |
| Nylon 66 | - | - | - | - | - | 100 | - |
| PBT | - | - | - | - | - | - | 100 |
| D-1 | 0.1 | 0.1 | 0.1 | 0.1 | - | - | - |
| E-1 | 0.3 | 0.3 | 0.3 | 0.3 | - | - | - |
| F-1 | 0.2 | 0.2 | 0.2 | 0.2 | - | - | - |
| G-1 | 0.1 | 0.1 | 0.1 | 0.1 | - | - | - |
| H-1 | 0.2 | - | 0.2 | 0.2 | - | - | - |
| I-1 | - | 0.2 | - | - | - | - | - |

Each of the connector housings prepared in the foregoing Examples and Comparative Examples was evaluated according to the following test methods.

1) Light Weight Property:

The specific gravity of the connector housing was measured by a water substitution method.

2) Dimensional Stability against Moisture Absorption:

The connector housing was conditioned at 35°C and 95% RH for 110 hours, and the dimensions of A, B, C, D, E, and F were measured to obtain a rate of dimensional change (%) due to moisture absorption at each site according to the following equation:

$$\text{Rate of Dimensional Change (\%)} = (A-B)/B \times 100$$

A:    Each dimension at saturation of water absorption
B:    Each dimension immediately after molding

3) Heat Resistance:

The connector housing was heat treated at 120°C for 1000 hours. A terminal having contact-bonded thereto a wire of about 100 mm in length was fixed to each of the thus heat-treated housing and the housing immediately after molding as shown in Fig. 3. The wire was pulled at a constant speed of about 100 mm/min, and the load (Newton, (kgf)) required for the terminal to be drawn from connecting part 3 in FIG. 3 (i.e., terminal retaining force) was measured. Any change of the appearance of the housing due to the heat treatment was also observed.

4) Fit in Connecting:

After conditioning at 35°C and 95% RH for 110 hours, the external housing was fitted into the internal housing at a speed of 250 mm/min in a non-resonant box. The sound pressure of the sound generated from fitting part 4 in FIG. 3 at the time of fitting was measured with a noise meter, and the sound pressure was analyzed by an analyzing recorder manufactured by Yokokawa Hokushin Denki Co., Ltd. to evaluate fit of the two housings. The higher the sound pressure, the better the fit in connecting.

5) Warpage:

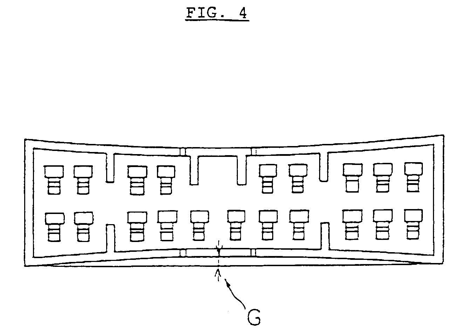

The amount of warpage G in FIG. 4 of the external housing in the width direction was measured with a tool microscope. The smaller the warpage, the higher the productivity and the higher the dimensional stability.

6) Dispersed Particle Size:

The housing was sliced with a microtome, and the slice was refluxed in hot xylene to remove the polyolefin forming the dispersed phase. After drying, the slice was observed under a scanning electron microscope to measure the dispersed particle size of modified polyolefin (B) which was observed as voids and polyamide 12 (C) which was observed as spheres dispersed in the matrix.
The results of these measurements are shown in Tables 2 to 6 below.

TABLE 2

| Light Weight Property and Dimensional Stability against Moisture | | | | | | | |
|---|---|---|---|---|---|---|---|
| Example No. | Specific Gravity | Dimensional Change by Moisture Absorption | | | | | |
| | | A (%) | B (%) | C (%) | D (%) | E (%) | F (%) |
| Example 1 | 1.08 | 0.07 | 0.14 | 0.35 | 0.32 | 0.06 | 0.48 |
| Example 2 | 1.07 | 0.10 | 0.14 | 0.42 | 0.38 | 0.11 | 0.48 |
| Example 3 | 1.08 | 0.07 | 0.01 | 0.28 | 0.28 | 0.06 | 0.41 |
| Comparative Example 1 | 1.04 | 0.06 | 0.08 | 0.20 | 0.19 | 0.04 | 0.28 |
| Comparative Example 2 | 1.14 | 0.07 | 0.15 | 0.33 | 0.30 | 0.07 | 0.47 |
| Comparative Example 3 | 1.14 | 1.10 | 1.67 | 1.49 | 1.87 | 2.11 | 2.04 |

TABLE 2   (continued)

| Light Weight Property and Dimensional Stability against Moisture | | | | | | | |
|---|---|---|---|---|---|---|---|
| Example No. | Specific Gravity | Dimensional Change by Moisture Absorption | | | | | |
| | | A (%) | B (%) | C (%) | D (%) | E (%) | F (%) |
| Comparative Example 4 | 1.31 | 0.01 | 0.08 | 0.11 | 0.16 | 0.04 | 0.21 |

TABLE 3

| Heat Resistance | | | | | |
|---|---|---|---|---|---|
| Example No. | Terminal Retaining Force (Newton, (kgf)) | | | | Change of Appearance |
| | Before Heat Treatment | | After Heat Treatment | | |
| | External | Internal | External | Internal | |
| Example 1 | 98.1 (10.0) | 96.1 (9.8) | 108.9 (11.1) | 102.0 (10.5) | no change |
| Example 2 | 100 (10.2) | 98.1 (10.0) | 108.9 (11.1) | 103.0 (10.6) | no change |
| Example 3 | 96.1 (9.8) | 92.2 (9.4) | 98.1 (10.0) | 94.1 (9.6) | no change |
| Comparative Example 1 | 45.1 (4.6) | 45.1 (4.6) | 37.3 (3.8) | 35.3 (3.6) | no change |
| Comparative Example 2 | 100 (10.2) | 98.1 (10.0) | 110.8 (11.3) | 103.0 (10.6) | yellowish browned |
| Comparative Example 3 | 114.7 (11.7) | 98.1 (10.0) | 123.6 (12.6) | 108.9 (11.1) | browned |
| Comparative Example 4 | 78.5 (8.0) | 74.5 (7.6) | 81.4 (8.3) | 80.4 (8.2) | no change |

TABLE 4

| Fit in Connecting | | | | |
|---|---|---|---|---|
| Example No. | Before Moistening | | After Moistening | |
| | Maximum Frequency (kHz) | Maximum Sound Pressure (dB) | Maximum Frequency (kHz) | Maximum Sound Pressure (dB) |
| Example 1 | 4.2 | 92 | 4.3 | 89 |
| Example 2 | 4.2 | 90 | 4.2 | 87 |
| Example 3 | 4.2 | 91 | 4.2 | 88 |
| Comparative Example 1 | 4.0 | 77 | 3.8 | 74 |
| Comparative Example 2 | 4.2 | 92 | 4.2 | 89 |
| Comparative Example 3 | 4.7 | 81 | 4.2 | 68 |
| Comparative Example 4 | 3.7 | 90 | 3.8 | 87 |

TABLE 5

| Warpage | |
|---|---|
| Example No. | Warpage (mm) |
| Example 1 | 0.07 |
| Example 2 | 0.07 |
| Example 3 | 0.08 |
| Comparative Example 1 | 0.11 |
| Comparative Example 2 | 0.37 |
| Comparative Example 3 | 0.31 |
| Comparative Example 4 | 0.26 |

TABLE 6

| Dispersibility | | |
|---|---|---|
| Example No. | Dispersed Particle Size of Modified Polyolefin (μm) | Dispersed Particle Size of Polyamide 12 (μm) |
| Example 1 | 0.7 - 1.3 | 0.7 - 0.8 |
| Example 2 | 0.6 - 1.2 | 0.6 - 0.8 |
| Example 3 | 0.9 - 1.4 | 0.6 - 0.8 |
| Comparative Example 1 | 1.0 - 2.0 | 0.8 - 1.2 |
| Comparative Example 2 | 0.7 - 1.3 | - |

As can be seen from Tables 2 through 6, the connector housings of Examples 1 to 3 are of light weight (low specific gravity), undergo no substantial dimensional change in a high humidity atmosphere and have excellent mechanical characteristics and excellent heat resistance. They suffer from little deterioration of fit in connecting due to moisture absorption. It is also seen that the modified polyolefin (B) and the polyamide 12 (C) exhibit satisfactory dispersibility in the matrix, making a contribution to manifestation of various characteristics, especially mechanical strength and toughness.

Although the housings of Comparative Example 1 are of light weight and undergo little dimensional change in a high humidity atmosphere, they are inferior in mechanical strength as exemplified by the terminal retaining force, heat resistance and fit in connecting. Although the housings of Comparative Example 2 are satisfactory in light weight property, resistance to dimensional change due to moisture absorption, mechanical strength, heat resistance, and fit in connecting, they undergo considerable warpage (poor productivity). The housings of Comparative Example 3 are, though having fair light weight property, inferior in dimensional stability and fit in connecting. Further, the housings of Comparative Example 4 have a high specific gravity, though excellent in dimensional stability, mechanical characteristics, heat resistance, and fit in connecting.

As described and demonstrated above, the connectors according to the present invention are light, undergo little dimensional change even in a high humidity atmosphere, have high heat resistance, excellent mechanical characteristics, such as a terminal retaining force, and good fit in connecting. Further, the connectors can be produced at high productivity.

**Claims**

1. A connector comprising a housing comprising a resin composition containing (A) from 50 to 92 parts by weight of a semi-aromatic polyamide having a melting point of not less than 270°C and less than 310°C as measured with a differential scanning calorimeter, (B) from 5 to 35 parts by weight of a modified polyolefin obtained by graft-modifying polyethylene with 0.05 to 5 mol% of an $\alpha,\beta$-unsaturated carboxylic acid, an anhydride thereof, an acid halide thereof, an amidoimide thereof or an ester thereof, and (C) from 3 to 15 parts by weight of polyamide 12, per 100 parts by weight in total of said resin composition, wherein said semi-aromatic polyamide (A) is a copolymer of hexamethylenediamine adipate and hexamethylenediamine terephthalate at a weight ratio of from 80/20 to 50/50.

2. The connector as claimed in claim 1, wherein said semi-aromatic polyamide (A) has a melting point of from 290 to 300°C.

3. The connector as claimed in claim 1, wherein said semi-aromatic polyamide (A) has a relative viscosity $\eta_r$ of from 1.0 to 3.5 as measured in 98% concentrated sulfuric acid at 25°C.

4. The connector as claimed in claim 1, wherein said modified polyolefin (B) has a modulus of elasticity of from 198 to 1471 MPa (2,000 to 15,000 kgf/cm$^2$).

5. The connector as claimed in claim 1, wherein said polyolefin (B) is obtained by graft-modifying polyethylene with 0.05 to 5 mol% of an unsaturated dicarboxylic acid or its anhydride.

6. The connector as claimed in claim 1, wherein said polyamide 12 (C) has a relative viscosity $\eta_r$ of from 2.0 to 3.0 as measured in 98% concentrated sulfuric acid at 25°C.

7. The connector as claimed in claim 1, wherein said semi-aromatic polyamide (A) forms a matrix in which said modified polyolefin (B) and said polyamide 12 (C) form a disperse phase, with the dispersed particle size of said modified polyolefin (B) being from 0.5 to 2 $\mu$m and that of said polyamide 12 (C) being from 0.5 to 1 $\mu$m.

8. The connector as claimed in claim 1, wherein said resin composition further contains (D) from 0.05 to 1 part by weight of a hindered phenol series antioxidant and (E) from 0.05 to 1 part by weight of a sulfur series antioxidant per 100 parts by weight of the total weight of components (A) to (C).

9. The connector as claimed in claim 8, wherein said hindered phenol series antioxidant is that in which 2-position of the phenol is substituted with a methyl group and the 6-position of the phenol is substituted with a t-butyl group.

10. The connector as claimed in claim 1, wherein said resin composition further contains from 0.05 to 1 part by weight of at least one compound selected from the group consisting of (F) a metal salt of a higher fatty acid having from 16 to 22 carbon atoms, (G) polyethylene wax, (H) a montan wax metal salt, and (I) a montan wax ester metal salt per 100 parts by weight of the total weight of components (A) to (C).

**Patentansprüche**

1. Verbinder, umfassend ein Gehäuse, das eine Harzzusammensetzung umfaßt, die (A) von 50 bis 92 Gewichtsteile eines halbaromatischen Polyamids mit einem Schmelzpunkt von nicht weniger als 270°C und weniger als 310°C, wie mit einem Differentialscanningcalorimeter gemessen, aufweist, (B) von 5 bis 35 Gewichtsteilen eines modifizierten Polyolefins, das durch Pfropfmodifizierung von Polyethylen mit 0,05 bis 5 Mol% einer $\alpha,\beta$-ungesättigten Carbonsäure, eines Anhydrids davon, eines Säurehalogenids davon, eines Amidoimids davon oder eines Esters davon erhalten wird, und (C) von 3 bis 15 Gewichtsteile Polyamid 12 pro 100 Gewichtsteilen der gesamten Harzzusammensetzung enthält, wobei das halbaromatische Polyamid (A) ein Copolymer von Hexamethylendiaminadipat und Hexamethylendiaminterephthalat in einem Gewichtsverhältnis von 80/20 bis 50/50 ist.

2. Verbinder nach Anspruch 1, wobei das halbaromatische Polyamid (A) einen Schmelzpunkt von 290 bis 300°C aufweist.

3. Verbinder nach Anspruch 1, wobei das halbaromatische Polyamid (A) eine relative Viskosität $\eta_r$ von 1,0 bis 3,5, wie in 98 %iger konzentrierter Schwefelsäure bei 25°C gemessen, aufweist.

4. Verbinder nach Anspruch 1, wobei das modifizierte Polyolefin (B) ein Elastizitätsmodul von 198 bis 1471 Mpa (2000 bis 15000 kgf/cm$^2$) aufweist.

5. Verbinder nach Anspruch 1, wobei das Polyolefin (B) durch Pfropfmodifizierung von Polyethylen mit 0,05 bis 5 Mol% einer ungesättigten Dicarbonsäure oder deren Anhydrids erhalten wird.

6. Verbinder nach Anspruch 1, wobei das Polyamid 12 (C) eine relative Viskosität $\eta_r$ von 2,0 bis 3,0, wie in 98 %iger konzentrierter Schwefelsäure bei 25°C gemessen, aufweist.

7. Verbinder nach Anspruch 1, wobei das halbaromatische Polyamid (A) eine Matrix bildet, in der das modifizierte Polyolefin (B) und das Polyamid 12 (C) eine disperse Phase bilden, wobei die Größe der dispergierten Teilchen des modifizierten Polyolefins (B) 0,5 bis 2 $\mu$m beträgt und die Größe der dispergierten Teilchen des Polyamids 12 (C) 0,5 bis 1 $\mu$m beträgt.

8. Verbinder nach Anspruch 1, wobei die Harzzusammensetzung ferner (D) von 0,05 bis 1 Gewichtsteile eines Antioxydationsmittels aus der sterisch gehinderten Phenolreihe und (E) von 0,05 bis 1 Gewichtsteile eines Antioxydationsmittels aus der Schwefelreihe pro 100 Gewichtsteilen des Gesamtgewichts der Bestandteile (A) bis (C) enthält.

9. Verbinder nach Anspruch 8, wobei das Antioxydationsmittel aus der sterisch gehinderten Phenolreihe das ist, in dem die 2-Position des Phenols mit einer Methylgruppe substituiert ist und die 6-Position des Phenols mit einer t-Butylgruppe substituiert ist.

10. Verbinder nach Anspruch 1, wobei die Harzzusammensetzung ferner 0,05 bis 1 Gewichtsteile mindestens einer Verbindung, die aus der Gruppe, die aus (F) einem Metallsalz einer höheren Fettsäure mit 16 bis 22 Kohlenstoffatomen, (G) einem Polyethylenwachs, (A) einem Montanwachsmetallsalz und (I) einem Montanwachsestermetallsalz besteht, ausgewählt ist, pro 100 Gewichtsteilen des Gesamtgewichts der Bestandteile (A) bis (C) enthält.

**Revendications**

1. Connecteur comprenant un boîtier comprenant une composition de résine contenant (A) de 50 à 92 parties en poids d'un polyamide semi-aromatique ayant un point de fusion supérieur ou égale à 270°C et inférieur à 310°C selon une mesure par analyse calorimétrique différentielle, (B) de 5 à 35 parties en poids d'une polyoléfine modifiée obtenue en modifiant par greffage un polyéthylène avec 0,05 à 5 % en mole d'un acide carboxylique $\alpha,\beta$-insaturé, d'un de ses anhydrides, d'un de ses halogénure d'acide, d'un de ses amido-imide ou d'un de ses ester, et (C) de 3 à 15 parties en poids de polyamide 12, pour 100 parties en poids au total de ladite composition de résine, ledit polyamide semi-aromatique (A) étant un copolymère d'adipate d'hexaméthylènediamine et de téréphtalate d'hexaméthylènediamine selon un rapport pondérai compris entre 80/20 et 50/50.

2. Connecteur selon la revendication 1, dans lequel ledit polyamide semi-aromatique (A) a un point de fusion compris entre 290 et 300°C.

3. Connecteur selon la revendication 1, dans lequel ledit polyamide semi-aromatique (A) a une viscosité relative $\eta_r$ comprise entre 1,0 et 3,5 selon une mesure dans de l'acide sulfurique concentré à 98 % à 25°C.

4. Connecteur selon la revendication 1, dans lequel ladite polyoléfine modifiée (B) a un module d'élasticité compris entre 198 et 1471 MPa (2000 à 15000 kgf/cm$^2$).

5. Connecteur selon la revendication 1, dans lequel ladite polyoléfine (B) est obtenu en modifiant par greffage un polyéthylène avec 0,05 à 5 % en mole d'un acide dicarboxylique insaturé ou de son anhydride.

6. Connecteur selon la revendication 1, dans lequel ledit polyamide 12 (C) a une viscosité relative $\eta_r$ comprise entre 2,0 et 3,0 selon une mesure dans de l'acide sulfurique concentré à 98 % à 25°C.

7. Connecteur selon la revendication 1, dans lequel ledit polyamide semi-aromatique (A) forme une matrice dans laquelle ladite polyoléfine modifiée (B) et ledit polyamide 12 (C) forment une phase dispersée, la tailles des particules dispersées de ladite polyoléfine modifiée (B) étant comprise entre 0,5 et 2 μm et celle du polyamide 12 (C) étant comprise entre 0,5 et 1 μm.

8. Connecteur selon la revendication 1, dans lequel ladite composition de résine contient en outre (D) de 0,05 à 1 partie en poids d'un antioxydant de type phénol encombré et (E) de 0,05 à 1 partie en poids d'un antioxydant de type soufre pour 100 parties en poids du poids total des composants (A) à (C).

9. Connecteur selon la revendication 8, dans lequel ledit antioxydant de type phénol encombré est un de ceux dans lequel le phénol est substitué en position 2 par un groupe méthyle et en position 6 par un groupe t-butyle.

10. Connecteur selon la revendication 1, dans lequel ladite composition de résine contient en outre de 0,05 à 1 partie en poids d'au moins un composé choisi dans l'ensemble constitué de (F) un sel de métal d'un acide gras supérieur contenant de 16 à 22 atomes de carbone, (G) une cire de polyéthylène, (H) un sel de métal de cire de lignite, et (I) un sel de métal d'ester de cire de lignite, pour 100 parties en poids du poids total des composants (A) à (C).

FIG. 1

FIG. 2

FIG. 3

FIG. 4

G